# EUROPÄISCHE PATENTANMELDUNG

(11) **EP 1 518 621 A1**
(43) Veröffentlichungstag der Anmeldung: **30.03.2005**
(21) Anmeldenummer: 04017434.4
(22) Anmeldetag: 23.07.2004
(51) Int. Cl.: B22F 1/00, B22F 3/10

(54) **Verwendung eines Zuckers**

(30) Priorität: 27.09.2003 DE 10344931
(71) Anmelder: Zschimmer & Schwarz GmbH & Co KG Chemische Fabriken, 56112 Lahnstein (DE)
(72) Erfinder: Quirmbach, Peter, Dr., 56235 Hundsdorf (DE); Schwartz, Sylvia, 56068 Koblenz (DE); Hölzgen, Michael, 56424 Ebernhahn (DE)
(74) Vertreter: Berkenbrink, Kai-Oliver

(57) **Zusammenfassung**

Verwendung eines modifizierten Zuckers oder eines Zuckeralkohols als Bindemittel oder Bindemittelbestandteil.

## Beschreibung

Zur Herstellung von Massen und Formteilen aus metallischen Pulvern ist es bekannt, daß die Pulver mit einem geeigneten Bindemittel oder einer Bindemittelkombination zu versetzen sind, um eine genügende Festigkeit bei der Verarbeitung der Pulver beziehungsweise der daraus hergestellten Formteile bei der Herstellung, aber auch beim Einsatz, zu erreichen.

Als Ausgangsstoffe für die metallischen Pulver werden insbesondere benutzt Legierungen auf Basis z.B. Eisen, Stahl und Leichtmetallen sowie Superlegierungen. Die Pulver entstammen unterschiedlichen Aufbereitungsprozessen wie z.B. Carbonylreaktionen, Wasserverdüsung oder Gasverdüsung.

Zu den bekannten Bindemitteln gehören Kohlenwasserstoffe wie z.B. Montanwachse, Polyolefine, Amidwachse, Kunstharze sowie verschiedene anorganische und organische Binder.

Für bestimmte Anwendungen genügt es, sogenannte temporäre Bindemittel zu verwenden. Diese haben vor allem die Funktion, die Grünstandsfestigkeit eines Formlings zu sichern, bis - im Pyroprozeß - die Produktfestigkeit insbesondere von einer Feststoffbindung übernommen wird.

Vor allem bei Heißformgebungsverfahren, beispielsweise Spritzguß oder bei der Heißextrusion, ist die Verwendung thermoplastischer Bindemittel in metallischen Pulvern bekannt. Das Gemisch aus metallischem Pulver und Bindemittel wird auf eine Temperatur oberhalb des Schmelzpunktes des Bindemittels erwärmt, damit in eine fließfähige (viskose) Form überführt und anschließend verarbeitet. Nach der Formgebung muß das Bindemittel aus dem Rohling (Grünteil) wieder entfernt werden, bevor sich ein üblicher Sinterprozeß anschließt.

Die sogenannte "Entbinderung" stellt unter verfahrenstechnischen sowie umweltpolitischen Gesichtspunkten ein Problem dar. Verwendet man Lösungsmittel, um die Bindemittel herauszulösen, so fallen neben dem Bindemittel selbst zusätzliche Schadstoffe an, die entsorgt werden müssen. Einzelheiten dazu beschreibt die EP 0 362 866 A2. In dieser Schrift wird im übrigen ein Verfahren zur Herstellung eines Sinterformteils beschrieben, bei dem ein organisches Bindemittel verwendet wird, welches aus einem Anteil eines wasserlöslichen und einem Anteil eines wasserunlöslichen thermoplastischen organischen Polymers besteht. Nach der Formgebung wird das Formteil in Kontakt mit Wasser gebracht und der wasserlösliche Polymeranteil herausgeholt, bevor der Formkörper gesintert wird.

Notwendigerweise müssen für den Umgang von metallischen Pulvern hydrolyseempfindliche Stoffe wie z.B. Carbonyleisen durch den Zusatz von sog. Inhibitoren davor geschützt werden, innerhalb der Verweilzeit der Wasserlagerung zu oxidieren.

Der durch die Wasserlagerung (Wasserbehandlung) erreichbare Extraktionsgrad an Bindemittel beträgt dabei zum Teil deutlich unter 50 %, so daß die vorstehend beschriebenen Probleme bei der Entfernung des Rest-Bindemittels im wesentlichen analog gelten.

Der Erfindung liegt insoweit die Aufgabe zugrunde, eine umweltfreundliche und verfahrenstechnisch optimierte Möglichkeit aufzuzeigen, eine zumindest temporäre Bindung in metallischen Pulvern und Pulvern aus Hartstoffen sowie daraus erstellten Formteilen zu erreichen.

Dabei liegt der Erfindung die Erkenntnis zugrunde, daß dieses Ziel durch Verwendung eines modifizierten Zuckers oder eines Zuckeralkohols als Bindemittel oder Bindemittelbestandteil für metallische Pulver oder Pulver aus Hartstoffen und daraus erstellten Formteilen erreicht werden kann.

Dabei steht der Begriff "Zucker" stellvertretend für Monound Oligosaccharide. Diese niedermolekularen Kohlenhydrate sind süßschmeckende, wasserlösliche, kristalline und amorphe Verbindungen von definiertem Molekulargewicht.

Die genannten Kohlenhydrate sind abzugrenzen von Polysacchariden, die wie die meisten Polymere kein einheitliches Molekulargewicht haben und sich außerdem in Wasser nur schlecht oder gar nicht lösen.

Der Begriff Zuckeralkohole beschreibt eine Gruppe von Polyhydroxy-Verbindungen, die aus Monosacchariden durch Reduktion der Carbonyl-Funktion entstanden sind. Diese Zuckeralkohole sind überwiegend kristallin, können aber in modifizierter Form auch amorph sein. Es handelt sich um wasserlösliche Polyole. In Abhängigkeit von der Anzahl der im Molekül enthaltenen Hydroxy-Gruppen unterscheidet man beispielsweise Tetrite, Pentite und Hexite. Zu den natürlich vorkommenden Zuckeralkoholen zählen unter anderem Glycerin und Adonit.

Den genannten Zuckern und Zuckeralkoholen ist gemein, daß sie eine "klebrige Konsistenz" besitzen, was sie in besonderer Weise für die Verwendung als Bindemittel oder Bindemittelbestandteil geeignet macht. Ein weiterer wesentlicher Vorteil besteht darin, daß beide Stoffe eine sehr gute Wasserlöslichkeit aufweisen.

Daraus folgt, daß sie bei der Behandlung von metallischen Pulvern und Pulvern aus Hartstoffen und deren anschließender Verarbeitung zu Formteilen folgenden Wirkungsmechanismus erfüllen:
Bei der Formgebung von metallischen Pulvern und Pulvern aus Hartstoffen führt die Zugabe der Kohlenhydrate zu einem Verkleben der metallischen Partikel. Bei Temperaturerhöhung zur Vorbereitung der mit dem Bindemittel versetzten metallischen Pulver beziehungsweise der mit dem Bindemittel versetzten Pulvern aus Hartstoffen zur anschließenden Formgebung in Formgebungsverfahren der eingangs genannten Art (z.B. Spritzguß, Heißextrusion), geht das Bindemittel in einen niedrig viskosen Aggregatzustand über, der das metallische Pulver beziehungsweise das Pulver aus Hartstoffen insgesamt plastisch macht, so daß sich auch komplizierte keramische Formteile leicht in die gewünschte Form pressen, spritzen oder gießen lassen.

Ein weiterer Vorteil besteht darin, daß die Klebewirkung des Bindemittels bei erhöhten Temperaturen (c. 140 bis 150°C) aufgrund der geringen Hygroskopizität verlorengeht, also den Formgebungsprozeß in dieser Phase nicht nur nicht behindert, sondern positiv unterstützt.

Selbst bei Verwendung kristalliner Zucker wurde festgestellt, daß diese, sofern sie einmal durch Temperaturerhöhung in den viskosen Zustand überführt wurden, nicht mehr rekristallisieren. Diese Eigenschaft ist deshalb vorteilhaft, weil etwaige, im Grünling verbleibende Anteile des modifizierten Zuckers oder Zuckeralkohols nicht durch Rekristallisation zu Mikrorissen im keramischen Gefüge führen können.

Die gegenüber bekannten Bindemitteln deutlich erhöhte Wasserlöslichkeit führt dazu, daß das Bindemittel nach der Formgebung durch einfache Wasserlagerung leicht und nahezu vollständig aus dem metallischen Gefüge wieder herausgelöst werden kann. Dieser Lösungsprozeß wird gefördert, wenn die Behandlung in erwärmtem Wasser stattfindet. Dadurch, daß das Bindemittel ein auch in der Lebensmittelindustrie häufig verwendeter Stoff ist folgt unmittelbar weiter, daß die zurückbleibende Zuckerlösung keiner besonderen Entsorgung bedarf und insbesondere keine toxischen Bestandteile enthält.

Je nachdem, ob das Bindemittel ganz oder teilweise aus den genannten Zuckern beziehungsweise Zuckeralkoholen besteht wird es ganz oder teilweise bei der anschließenden Extraktion wieder aus dem Formteil entfernt. Dabei können ohne weiteres Extraktionswerte von 60 bis 99 % erreicht werden, je nach Dauer der Wasserlagerung (üblicherweise 20 bis 60 Stunden, bevorzugt 30 bis 50 Stunden) und Wassertemperatur (bevorzugt 30 bis 70°C).

Die Verwendung der genannten Zucker und Zuckeralkohole in amorpher Form stellt eine optimierte Auswahl dar.

Zu der letztgenannten Gruppe gehören beispielsweise durch Oxethylierung oder Oxpropylierung modifizierte Zucker oder Zuckeralkohole, oxalkylierte Kohlenhydrate, hydrierte beziehungsweise teilhydrierte Kohlenhydrate und/oder oxalkylierte hydrierte beziehungsweise teilhydrierte Kohlenhydrate als wasserlösliche Komponente.

Eine in Bezug auf die Verwendung als Bindemittel negative Karamelisierung der Stoffe bei Erwärmung wird durch die genannte Auswahl zuverlässig verhindert.

Wie ausgeführt können die ausgewählten Bindemittel sowohl alleine als auch in Kombination mit weiteren Hilfsstoffen eingesetzt werden. In letztgenanntem Fall beträgt der Zucker-/Zuckeralkohol-Anteil in der Regel 40 bis 90 Gew.-%. Zusatzstoffe können beispielsweise Gleitmittel, Inhibitoren, Benetzungsmittel oder Ausformhilfen (extern und intern) sein, wie sie als solche beispielsweise in der keramischen Aufbereitungstechnik bekannt sind. Hierzu gehören unter anderem:
Polymere aus Polyethylen, Polypropylen und/oder Ethylen-Vinylacetat-Copolymere ausEthylenvinylacetat und/oder Ethylenvinylester als Gleitmittel, die zu einer Vergleichmäßigung des Druckaufbaus beim Extrudieren führen; Tenside, insbesondere nichtionische Tenside (z.B. Fettsäurepolyglykolester) als Netzmittel oder Wachsester (z.B. Bienenwachs oder Wollfett).

Der Bindemittelanteil innerhalb einer Mischung aus metallischem Pulver, beispielsweise einem Edelstahlpulver, und Bindemittel beziehungsweise innerhalb einer Mischung aus einem Pulver aus Hartstoffen und Bindemittel kann bis zu 20 Gew.-%, bezogen auf die Gesamtmischung, betragen.

Die metallischen Pulver können beispielsweise aus Pulvern der Metalle Eisen, Stahl, Kupfer, Aluminium, sonstige Leichtmetalle, Titan, Zinn, Zink, Antimon, Blei, deren Legierungen oder Superliegierungen oder Mischungen der vorgenannten Materialien zusammengesetzt sein.

Die Pulver aus Hartstoffen können beispielsweise aus Pulvern der Hartstoffe Carbide (beispielsweise Wolfram- oder Titancarbide), Boride, Nitride oder Silicide oder Mischungen daraus zusammengesetzt sein.

Es können beispielsweise auch Mischungen aus metallischen Pulvern und Pulvern aus Hartstoffen vorliegen.
Anhand eines Beispieles wird die Erfindung nachstehend näher beschrieben:
91 Gew.-Teile eines metallischen Pulvers auf Basis Edelstahl werden mit 9 Gew.-% eines Bindemittels folgender Zusammensetzung vermischt:

75 Gew.-% Sorbit oxpropyliert, 15 Gew-% Ethylen-Vinylester und 10 Gew.-% Bienenwachs. Nach Vermischung (Homogenisierung) in üblichen Feststoffmischern wird die bindemittelhaltige Masse auf 160 bis 180°C erwärmt, so daß das Bindemittel in einen niedrigviskosen Aggregatzustand übergeht. Die Mischung aus metallischem Pulver und Bindemittel wird anschließend zu Formteilen wie z.B.Zahnrädern oder Getriebebauteilen trocken verpreßt und besitzt danach eine hervorragende Grünstandsfestigkeit.

Die geformten Teile werden danach 40 Stunden in 50° warmes Wasser eingelegt. Durch die Diffusionsprozesse werden dabei vor allem die Sorbitanteile praktisch vollständig extrahiert. Parallel dazu erhöht sich insbesondere das offene Porenvolumen des Formteils proportional, wobei die Grünstandsfestigkeit jedoch aufgrund des vorherigen Formgebungsprozesses praktisch unverändert erhalten bleibt.

Im konkreten Fall wurde eine Extraktionsgrad des Bindemittels von ca. 75 % erreicht.

Der verbleibende Bindemittelanteil im Zusammenhang mit der nach der Extraktion erhöhten (offenen) Porosität ist im anschließenden Pyroprozeß verfahrenstechnisch unschädlich. Während der Aufheizphase kommt es zu einer Rest-Bindemittelentferung (Entbinderung) über die offene Porenstruktur, an die sich die Sinterung des Produktes anschließt.

Gefügeschädigungen wurden keine beobachtet.

## Patentansprüche

1. Verwendung eines modifizierten Zuckers oder eines Zuckeralkohols als Bindemittel oder Bindemittelbestandteil für metallische Pulver oder Pulver aus Hartstoffen und Formteilen hieraus.

2. Verwendung nach Anspruch 1 mit der Maßgabe, daß der Zucker oder Zuckeralkohol in amorpher Form eingesetzt wird.

3. Verwendung nach Anspruch 1 mit der Maßgabe, daß ein durch Oxethylierung oder Oxpropylierung modifizierter Zucker oder Zuckeralkohol eingesetzt wird.

4. Verwendung nach Anspruch 1 mit der Maßgabe, daß ein Bindemittel mit 40 bis 90 Gew.-% Zucker oder Zuckeralkoholen, Rest Gleitmittel, Ausformhilfen (intern und extern), Netzmittel sowie Inhibitoren eingesetzt wird.
